# EUROPÄISCHE PATENTSCHRIFT

(11) **EP 2 176 938 B1**
(45) Veröffentlichungstag und Bekanntmachung des Hinweises auf die Patenterteilung: **01.04.2015**
(21) Anmeldenummer: 08773921.5
(22) Anmeldetag: 09.07.2008
(51) Int. Cl.: H02J 13/00, B60R 16/02, H04L 12/403

(54) **ELEKTRONISCHES STEUERGERÄT ZUM EINSATZ IN EINEM FAHRZEUG**
ELECTRONIC CONTROL UNIT FOR USE IN A VEHICLE
APPAREIL DE COMMANDE ÉLECTRONIQUE DESTINÉ À ÊTRE EMPLOYÉ DANS UN VÉHICULE

(30) Priorität: 17.07.2007 DE 102007033186
(43) Veröffentlichungstag der Anmeldung: 21.04.2010
(73) Patentinhaber: Brose Fahrzeugteile GmbH & Co. Kommanditgesellschaft, Hallstadt, 96103 Hallstadt (DE)
(72) Erfinder: NAUMANN, Guido, 35108 Allendorf/Eder (DE); FEUSTEL, Armin, 96050 Bamberg (DE); SCHINDHELM, Thomas, 96524 Neuhaus-Schierschnitz (DE)
(74) Vertreter: FDST Patentanwälte
(86) Internationale Anmeldenummer: PCT/EP2008/005566
(87) Internationale Veröffentlichungsnummer: WO 2009/010212

(56) Entgegenhaltungen:
- EP-A- 0 798 895
- PALATNIK E: "TRANSISTOR LATCH IMPROVES ON/OFF CIRCUITRY" EDN ELECTRICAL DESIGN NEWS, REED BUSINESS INFORMATION, HIGHLANDS RANCH, CO, US, Bd. 45, Nr. 24, 23. November 2000 (2000-11-23), Seite 157/158, XP001162526 ISSN: 0012-7515

## Beschreibung

Die Erfindung bezieht sich auf ein elektronisches Steuergerät zum Einsatz in einem Fahrzeug, insbesondere Kraftfahrzeug. Ein solches Steuergerät wird im Kraftfahrzeugbereich für vielfältige Steueraufgaben, insbesondere zur Ansteuerung einer motorischen Stellvorrichtung, z.B. eines Fensterhebers, einer Zentralverriegelung, einer Sitzverstellung oder eines Verdeck- oder Türstellsystems eingesetzt.

Ein Steuergerät der oben genannten Art umfasst üblicherweise einen Controller, meist in Form eines Mikroprozessors mit zugeordneten Speichermitteln, in denen eine Betriebssoftware (auch Firmware genannt) hinterlegt ist. Der Controller wird über einen Spannungsversorgungspfad mit einer Betriebsspannung, typischerweise mit 5 Volt Gleichspannung, versorgt. Der Spannungsversorgungspfad wird hierbei seinerseits üblicherweise durch die Fahrzeugbatterie mit einer Eingangsspannung von 12 Volt gespeist. Insbesondere infolge dieser Spannungsversorgung weist das Steuergerät auch in inaktivem Zustand eine gewisse Ruhestromaufnahme auf. Die Ruheströme der verschiedenen, in einem modernen Kraftfahrzeug eingesetzten Steuergeräte summieren sich dabei zu einem beträchtlichen Gesamtruhestrom, aufgrund dessen die Fahrzeugbatterie im Stillstand des Fahrzeugs unerwünscht schnell entladen würde.

Um den Ruhestromverbrauch des Fahrzeugs zu senken, ist ein für den Einsatz in einem Kraftfahrzeug vorgesehenes Steuergerät üblicherweise in einen so genannten Schlafzustand zu versetzen, in dem zumindest der Controller heruntergefahren und von der Betriebsspannung getrennt wird. Im Schlafzustand bleiben üblicherweise nur diejenigen Teile des Steuergeräts aktiv, die erforderlich sind, um den Controller im Bedarfsfall aus dem Schlafzustand "aufzuwecken". Bei einem solchen Aufweckvorgang muss der Controller neu gestartet werden.

Ein Neustart des Controllers muss auch dann vorgenommon werden, wenn die Eingangsspannung nach der Montage des Steuergeräts oder einem Abklemmen der Fahrzeugbatterie erstmalig bzw. erneut angelegt wird. Ein solches Anlegen der Eingangsspannung wird nachfolgend kurz als Einschaltvorgang (auch "Power-on") bezeichnet.

Ein Neustart des Controllers ist schließlich auch dann erforderlich, wenn die Eingangsspannung sich nach einem vorübergehenden Spannungseinbruch unter einen für den störungsfreien Betrieb des Controllers ausreichenden Wert wieder aufbaut. Ein solcher Spannungseinbruch tritt insbesondere häufig beim Anlassen des Kraftfahrzeugs auf.

In vielen Fällen ist es wünschenswert, den Startvorgang des Controllers in Abhängigkeit der jeweiligen Startsituation - insbesondere also beim Aufweck- oder Einschaltvorgang oder nach einem Spannungseinbruch - unterschiedlich auszuführen. Beispielsweise muss das Steuergerät bei einem Fensterheber bei einem Einschaltvorgang sicherheitsrelevante Funktionen, wie den Automatiklauf beim Fensterheber unterdrücken, bis die so genannte Normierung durchgeführt ist, d.h. bis die mechanischen Endanschläge eingelernt sind. Andererseits sollte der Automatiklauf beim Aufwecken oder nach einem kurzzeitigen Spannungseinbruch gerade nicht unterdrückt werden.

Ein üblicher Controller kann an sich zwischen den drei beschriebenen Startsituationen jedoch nicht unterscheiden. Dem Controller wird daher oft eine Spannungskontrolleinheit vorgeschaltet, die die zum Aufwecken des Controllers erforderlichen Bestandteile enthält und die dem Controller bei einem Neustart ein Statussignal zur Verfügung stellt, anhand dessen der Controller erkennen kann, ob ein Aufweckvorgang vorliegt bzw. ob im Rahmen des Neustarts eine Normierung durchgeführt werden soll. Auch eine solche Spannungskontrolleinheit kann aber in der Regel nicht zwischen dem erstmaligen Anlegen der Eingangsspannung oder einem lediglich kurzfristigen Einbruch der Eingangsspannung unterscheiden.

Bei einem aus DE 10 2004 026 383 A1 bekannten Steuergerät zum Einsatz in einem Kraftfahrzeug ist ein permanent mit Spannung versorgter integrierter Schaltkreis als Spannungskontrolleinheit vorgesehen. Die Spannungskontrolleinheit gibt hierbei in Abhängigkeit eines der Spannungskontrolleinheit zugeführten und in der Spanungskontrolleinheit verarbeiteten Steuersignals für den Controller und optional weitere spannungsversorgte Bauteile des Steuergeräts einen bestimmten spannungsabhängigen Betriebsmodus vor. Weiterhin wird durch die Spannungskontrolleinheit mindestens eine spannungsabhängige Überwachungsfunktion für den Prozessor des Steuergeräts realisiert.

Ein gattungsgemäßes Steuergerät ist aus EP 0 798 895 A1 bekannt.

Der Erfindung liegt die Aufgabe zugrunde, ein Steuergerät zum Einsatz in einem Fahrzeug, insbesondere Kraftfahrzeug, anzugeben, das mit einfachen Mitteln in der Lage ist, einen Einbruch der Betriebsspannung zu erkennen.

Diese Aufgabe wird erfindungsgemäß gelöst durch die Merkmale des Ansprüchs 1. Danach umfasst das elektronische Steuergerät einen Controller sowie einen Spannungsmesspfad. Der Spannungsmesspfad dient zur Erzeugung einer Spannungsmessgröße, die eine Information über den Wert der Eingangsspannung enthält, wobei der Spannungsmesspfad diese Spannungsmessgröße dem Controller zuführt. In dem Spannungsmesspfad ist eine Schalteinrichtung angeordnet, die dazu dient, den Spannungsmesspfad in dem Schlafzustand stromlos zu schalten.

Die Schalteinrichtung ist dabei erfindungsgemäß dazu ausgebildet, nach Herstellung eines durchgesteuerten Schaltzustandes diesen so lange selbständig aufrecht zu erhalten, bis ein definiertes Abschaltsignal zugeführt wird oder bis die Betriebsspannung einen vorgegebenen Schwellwert unterschreitet.

Als durchgesteuerter Zustand wird - im Gegensatz zu einem abgesteuerten Zustand-ein Schaltzustand der Schalteinrichtung verstanden, in dem diese einen Stromfluss in dem Spannungsmesspfad ermöglicht. Die Eigenschaft der Schalteinrichtung, den durchgesteuerten Zustand in der oben definierten Weise selbstständig aufrechtzuerhalten, wird nachfolgend als "Selbsthaltung" bezeichnet. Ein das Gegenteil zu dem Abschaltsignal bildendes Signal, das die Schalteinrichtung von dem abgesteuerten Zustand in den durchgesteuerten Zustand versetzt, wird nachfolgend als Anschaltsignal bezeichnet.

Durch die selbsthaltende Ausführung der Schalteinrichtung erhält diese neben ihrer Hauptfunktion, den Spannungsmesspfad im Schlafzustand stromlos zu schalten, eine Zusatzfunktion als Informationsspeicher. Durch einfache Abfrage der Spannungsmessgröße kann der Controller auf die in der Schalteinrichtung gespeicherte Information zurückgreifen, um bei einem Neustart zu ermitteln, ob der Neustart durch Anlegen der Eingangsspannung (Einschaltvorgang) oder lediglich durch einen vorübergehender Einbruch der Eingangsspannung ausgelöst wurde. Bei einem bloßen Spannungseinbruch sinkt die Eingangsspannung nämlich regelmäßig nicht auf null ab, sondern behält einen von null deutlich verschiedenen Spannungswert durchgehend bei. Hierdurch hält die Schalteinrichtung bei einem Spannungseinbruch den durchgeschaltetem Zustand selbstständig aufrecht, und zwar insbesondere auch dann, wenn durch den Spannungseinbruch die Funktion des Controllers zum Erliegen kommt.

Die Schalteinrichtung schaltet dagegen selbständig in den abgesteuerten Zustand zurück, sobald die Eingangsspannung vollständig zusammenbricht. Bei einem Einschaltvorgang befindet sich die Schalteinrichtung damit stets in abgesteuertem Zustand.

In bevorzugter Ausbildung ist die Schalteinrichtung derart ausgelegt bzw. dimensioniert, dass der für das Rückschalten der Schalteinrichtung bestimmende Schwellwert einen Mindestwert der Eingangsspannung, bei dem die Eingangsspannung zur Erzeugung der Betriebsspannung, und somit zur ausreichenden Versorgung des Controllers gerade noch ausreicht, unterschreitet. In vorteilhafter Dimensionierung beträgt der Schwellwert dabei insbesondere weniger als 5 Volt, bevorzugt höchstens 3 Volt und insbesondere etwa 1 Volt.

In besonders einfacher und preisgünstig realisierbarer Ausgestaltung ist die Schalteinrichtung durch eine bistabile elektronische Kippschaltung realisiert. In einer besonders vorteilhaften Ausführung umfasst die Schalteinrichtung einen ersten Transistor und einen zweiten Transistor. Der erste Transistor ist hierbei basisseitig an eine Steuerleitung angeschlossen, über welche das Abschaltsignal sowie das Anschaltsignal übermittelbar sind. Emitterseitig ist der erste Transistor auf Masse gelegt. An den zweiten Transistor ist emitterseitig die Eingangsspannung angelegt. Kollektorseitig ist der zweite Transistor mit einem Spannungswandler verbunden, der zur Erzeugung der Spannungsmessgröße dient. Der erste Transistor und der zweite Transistor sind mitgekoppelt, indem der Kollektor jedes Transistors mit der Basis des jeweils anderen Transistors verschaltet ist.

Schließlich sind Emitter und Basis jedes Transistors jeweils über einen Koppelwiderstand miteinander verschaltet.

Als Spannungswandler wird allgemein und im weitesten Sinne eine beliebige elektronische Schaltung verstanden, die eine elektrische Spannung in eine andere elektrische Spannung, im vorliegenden Fall die Eingangsspannung in die Spannungsmessgröße umwandelt. In besonders einfacher, aber zweckmäßiger Ausgestaltung ist der Spannungswandler durch einen Spannungsteiler gebildet.

In vorteilhafter Ausgestaltung ist die Schalteinrichtung von dem Controller aus reversibel an- und abschaltbar. Die Schalteinrichtung ist hierzu über die Steuerleitung mit dem Controller verschaltet.

Zweckmäßigerweise umfasst das Steuergerät einen dem Spannungsmesspfad parallelgeschalteten Spannungsversorgungspfad. Der Spannungsversorgungspfad erzeugt hierbei im Betrieb aus der Eingangsspannung eine Betriebsspannung und stellt diese dem Controller zur Verfügung. In dem Spannungsversorgungspfad ist eine weitere Schalteinrichtung angeordnet, die dazu dient, den Controller in dem Schlafzustand von der Betriebsspannung zu trennen.

Um besser zwischen einem Aufweckvorgang und einem Neustart des Controllers nach einem Spannungseinbruch unterscheiden zu können, umfasst das Steuergerät in bevorzugter Ausbildung ein Statusanzeigemodul, das dazu ausgebildet ist, dem Controller bei einem Startvorgang ein Statussignal zur Verfügung zu stellen, anhand dessen erkennbar ist, ob der Controller aus dem Schlafzustand gestartet, d.h. aufgeweckt wurde. Das Statusanzeigemodul kann wahlweise als Hardware und/oder Softwarebaustein realisiert sein. Das Statusanzeigemodul kann weiterhin als separates Bauteil ausgebildet oder z.B. in den Controller integriert sein. In bevorzugter Ausbildung ist das Statusanzeigemodul zusammen mit den Funktionsteilen des Spannungsversorgungspfads in einer dem Controller vorgeschalteten Spannungskontrolleinheit integriert.

Nachfolgend wird ein Ausführungsbeispiel der Erfindung anhand einer Zeichnung näher erläutert. Darin zeigen:
- Fig. 1: in einem schematisch vereinfachten elektronischen Schaltbild ein elektronisches Steuergerät zum Einsatz in einem Kraftfahrzeug mit einem Controller, einer diesem vorgeschalteten Spannungskontrolleinheit sowie einem hiervon separaten Spannungsmesspfad,
- Fig. 2: in einem zeitlichen Diagramm ein Schaltspiel einer der Spannungskontrolleinheit und dem Spannungsmesspfad zugeführten Eingangsspannung, einer von der Spannungskontrolleinheit aus der Eingangsspannung gewonnenen Betriebsspannung, eines von dem Spannungsmesspfad aus der Eingangsspannung abgeleiteten Spannungsmessgröße sowie eines von der Spannungskontrolleinheit an den Controller abgegebenen Statussignals beim Einschalten der Eingangsschaltung,
- Fig. 3: in Darstellung gemäß Fig. 2 ein entsprechendes Schaltspiel bei einem Einbruch der Eingangsspannung, sowie
- Fig. 4: in Darstellung gemäß Fig. 2 ein entsprechendes Schaltspiel bei einem Aufwecken des Steuergeräts aus einem Schlafzustand.

Einander entsprechende Teile und Größen sind in allen Figuren stets mit gleichen Bezugszeichen versehen.

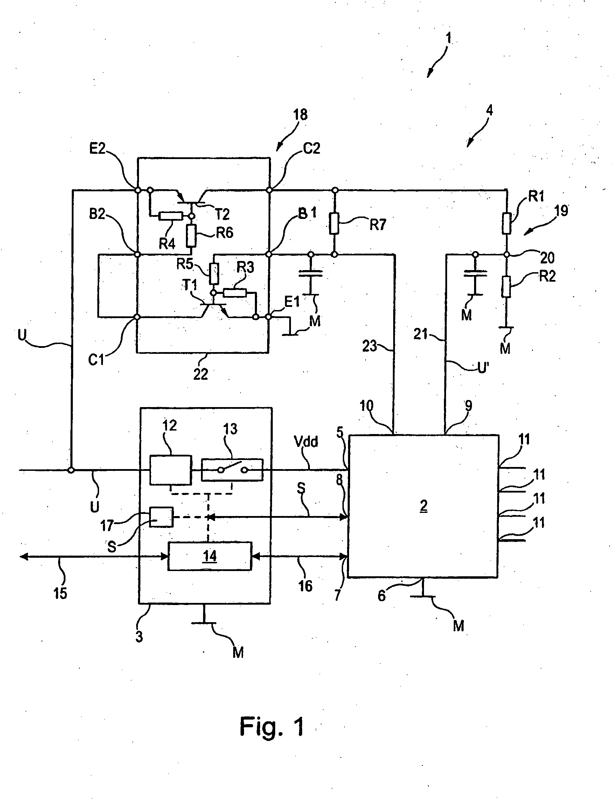

Das in Fig. 1 dargestellte Steuergerät 1 dient beispielsweise zur Ansteuerung eines Kraftfahrzeug-Fensterhebers. Das Steuergerät 1 umfasst einen Controller 2, eine Spannungskontrolleinheit 3 sowie einen Spannungsmesspfad 4.

Der Controller 2 ist im Wesentlichen durch einen Mikroprozessor sowie durch Speichermittel gebildet, in denen eine Betriebssoftware (Firmware) implementiert ist. Der Controller 2 verfügt über Anschlüsse 5 und 6, über welche dem Controller 2 eine Betriebsspannung Vdd sowie Massenpotenzial (nachfolgend kurz als Masse M bezeichnet) zuführbar ist. Der Controller 2 verfügt weiterhin über einen Busanschluss 7 zum Austausch von Daten mit weiteren Busteilnehmern. Der Busanschluss 7 ist insbesondere zum Anschluss an einen LIN-Bus ausgelegt. Der Controller 2 umfasst darüber hinaus einen Signalanschluss 8 zum Austausch von Statussignalen S mit der Spannungskontrolleinheit 3, einen Analogeingang 9 sowie eine Anzahl von Digitalausgängen (nachfolgend als Ports 10,11 bezeichnet), von denen der Port 10 zur Ansteuerung des Spannungsmesspfads 4 und die Ports 11 zur Ansteuerung von (nicht dargestellten) Funktionsteilen des Fensterhebers dient.

Die Spannungskontrolleinheit 3 ist ebenfalls in Form eines Controllers (d.h. einer programmierbaren integrierten Schaltung) oder in Form einer anwenderspezifischen integrierten Schaltung (ASIC) ausgebildet und umfasst einen Spannungsregler 12 mit einer nachgeschalteten Schalteinrichtung 13. Der Spannungsregler 12 und die Schalteinrichtung 13 bilden die Funktionsteile eines Spannungsversorgungspfads, der zur Bereitstellung der Betriebsspannung Vdd dient.

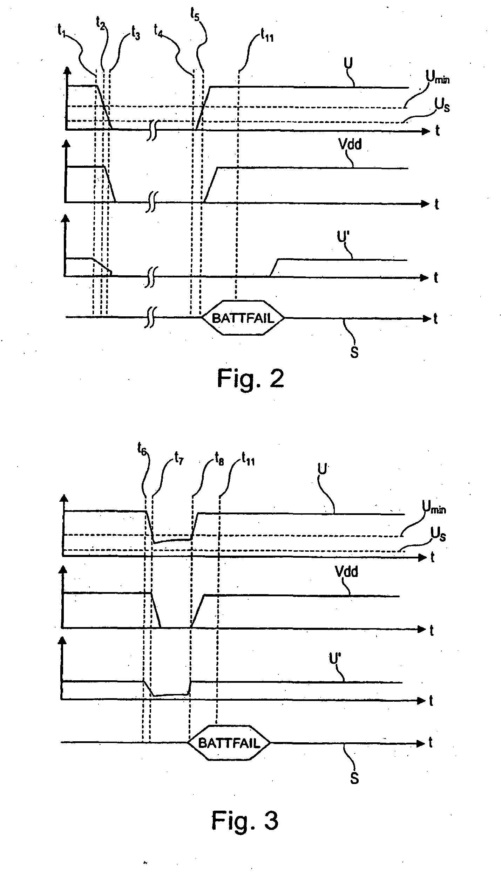

Der bevorzugt als elektronischer Schalter, insbesondere Transistor, ausgebildeten Schalteinrichtung 13 ist hierzu eingangsseitig die Fahrzeugbatteriespannung als Eingangsspannung U zugeführt. Der Spannungsregler 12 setzt diese Eingangsspannung U in die konstante Betriebsspannung Vdd um, solange die Eingangsspannung U einen Mindestwert Umin (siehe Fig. 2) von z.B. 5 Volt nicht unterschreitet. Durch die nachgeschaltete Schalteinrichtung 13 kann der Controller 2 von der Betriebsspannung Vdd getrennt werden, um beim Übergang in den Schlafzustand den Controller 2 abzuschalten.

Die Spannungskontrolleinheit 3 umfasst weiterhin ein LIN-Bus-Sende/Empfangsmodul, nachfolgend als LIN-Transceiver 14 bezeichnet, das über Busleitungen 15 und 16 einerseits mit einer (nicht näher dargestellten) zentralen Fahrzeugssteuerung und/oder sonstigen Befehlsgebern sowie andererseits mit dem Busanschluss 7 des Controllers 2 datenübertragungstechnisch verbunden ist. Die Spannungskontrolleinheit 3 umfasst ferner ein integriertes Statusanzeigemodul 17 in Form eines Softwarebausteins oder einer logischen Schaltung, das ein Statussignal S für den Controller 2 zur Verfügung stellt. Das Statussymbol S wird im Falle eines Neustarts des Controllers 2 mit einer Information belegt, anhand von welcher der Controller 2 erkennen kann, ob der Neustart durch Aufwecken des Steuergeräts 1 aus dem Schlafzustand oder durch ein Absinken der Eingangsspannung U unter die Mindestspannung Umin, d.h. durch einen Batteriefehler, erforderlich wurde. Das Statussignal kann hierzu - in beliebiger digitaler oder analoger Codierung - die Werte "WAKEUP" (als Hinweis auf einen Aufweckvorgang) oder "BATTFAIL" (als Hinweis auf einen Batteriefehler) annehmen.

Der Spannungsregler 12, die Schalteinrichtung 13, der LIN-Transeiver 14 und das Statusanzeigemodul 17 sind untereinander signal- und versorgungstechnisch verbunden. Die Komponenten der Spannungskontrolleinheit 3 bleiben auch dann eingeschaltet und somit aktiv, wenn der Controller 2 in den Schlafzustand versetzt wird.

Der Spannungsmesspfad 4 ist der Spannungskontrolleinheit 3 parallelgeschaltet und umfasst eine Schalteinrichtung 18 mit einem nachgeschalteten Spannungswandler 19 in Form eines Spannungsteilers mit Widerständen R1 und R2. Der Schalteinrichtung 18 ist hierbei eingangsseitig die Eingangsspannung U zugeführt.

An einem Mittelabgriff 20 des Spannungswandlers 19 wird eine zu der Eingangsspannung U im Wesentlichen proportionale Spannungsmessgröße U' über eine Messleitung 21 abgegriffen und dem Analogeingang 9 des Controllers 2 zugeführt.

Die Schalteinrichtung 13 wird im Wesentlichen gebildet durch ein integriertes Transistorarray 22, wie es beispielsweise von der Firma Infineon Technologies unter der Bezeichnung "BCR10PN" erhältlich ist. Das Tranistorarray 22 umfasst einen npn-Transistor T1 sowie einen pnp-Transistor T2, wobei Emitter und Basis des Transistors T1 ein Koppelwiderstand R3 und Emitter und Basis des Transistors T2 ein Koppelwiderstand R4 jeweils parallelgeschaltet sind. Das Transistorarray 22 verfügt sechs Anschlüsse, nämlich
- einen mit dem Emitter des Transistors T1 kurzgeschlossenen Emitteranschluss E1,
- einen mit dem Kollektor des Transistors T1 kurzgeschlossenen Kollektoranschluss C1,
- einen über einen Vorwiderstand R5 mit der Basis des Transistors T1 verschalteten Basisanschluss B1,
- einen mit dem Emitter des Transistors T2 kurzgeschalteten Emitteranschluss E2,
- einen mit dem Kollektor des Transistors T2 kurzgeschlessenen Kollektoranschluss C2 sowie
- einen mit der Basis des Transistors T2 über einen Vorwiderstand R6 verschalteten Basisanschluss B2.

Zur Realisierung der Schalteinrichtung 18 ist die Eingangsspannung U auf den Emitteranschluss E2 geschaltet, während der Kollektoranschluss C2 mit dem Widerstand R1 des Spannungswandlers 19 verschaltet ist. Der Emitteranschluss E1 ist auf Masse M gelegt. Zur Mitkopplung der Transistoren T1 und T2 sind einerseits der Kollektoranschluss C1 und der Basisanschluss B2 kurzgeschlossen, anderseits der Kollektoranschluss C2 und der Basisanschluss B1 über einen Widerstand R7 miteinander verschaltet. Der Basisanschluss B1 ist weiterhin zur Ansteuerung der Schalteinrichtung 18 über eine Steuerleitung 23 mit dem Port 10 des Controllers 2 verbunden. Zur elektromagnetischen Entstörung ist ferner jeweils zwischen die Messleitung 21 bzw. die Steuerleitung 23 und Masse M ein (nicht näher bezeichneter) Kondensator geschaltet.

Durch Anlegen eines logischen HIGH-Pegels, d.h. einer Spannung in Höhe von typischerweise +5 Volt auf den Port 10 wird die Schalteinrichtung 18 in einen durchgesteuerten Zustand geschaltet, in dem der Transistor T2 die Eingangsspannung U quasi ungeschwächt durchlässt. Das Anlegen eines logischen HIGH-Pegels an den Port 10 wirkt somit als Einschaltsignal für die Schalteinrichtung 18. Durch Rückkopplung eines Teils der Eingangsspannung U über die Widerstände R7 und R5 auf die Basis des Transistors T1 wird der durchgesteuerte Zustand der Schalteinrichtung 18 stabilisiert. Der durchgesteuerte Zustand bleibt somit auch dann erhalten, wenn der logische HIGH-Pegel am Port 10 des Controllers 2 einbricht, solange dabei der Port 10 des Controllers 2 weiterhin hochohmig bleibt. Der durchgesteuerte Zustand der Schalteinrichtung 18 wird vielmehr erst dann beendet, wenn an den Port 10 des Controllers 2 als Abschaltsignal ein logischer LOW-Pegel, typischerweise also das Massen-Potenzial M angelegt wird, oder wenn die Eingangsspannung U unter einen Schwellwert Us (Fig. 2)in Höhe von etwa 1 Volt absinkt.

Diese selbsthaltende Charakteristik der Schalteinrichtung 18 ermöglicht es dem Controller 2 zwischen einen Anlegen der Eingangsspannung U, d.h. einem Einschsltvorgang und einem bloßen Einbruch der Eingangsspannung U auf einen zwischen der Mindestspannung Umin und dem Schwellwert Us liegenden Wert zu unterscheiden.

Unter zusätzlicher Heranziehung des Statussignals S wird dem Controller 2 zusätzlich ermöglicht, einen Aufweckvorgang von den beiden vorgenannten Startsituationen zu unterscheiden.

Zur Verdeutlichung sind diesbezüglich in den Fig. 2 bis 4 Schaltspiele dargestellt, wie sie typischerweise bei einem Einschaltvorgang (Fig. 2), bei einem Spannungseinbruch (Fig. 3) bzw. beim Versetzen des Steuergeräts 1 in den Schlafzustand sowie beim anschließenden Aufwecken typischerweise erfolgen.

Jede der Darstellungen gemäß Fig. 2 bis Fig. 4 zeigt in übereinander geschichteten Diagrammen gegen die Zeit t
- den Verlauf der Eingangsspannung U im Vergleich zu der Mindestspannung Umin sowie dem Schwellwert Us,
- den Verlauf der Betriebsspannung Vdd,
- den Verlauf der Spannungsmessgröße U' sowie
- die zeitlich koinzidierende Entwicklung des Statussignals S.

In dem in Fig. 2 dargestellten Fallbeispiel für einen Einschaltvorgang wird zu einem Zeitpunkt t1 die Eingangsspannung U abgeschaltet, z.B. indem die Fahrzeugbatterie abgeklemmt wird. Zu einem geringfügig späteren Zeitpunkt t2 sinkt die Eingansspannung U unter die Mindestspannung Umin ab, wodurch auch die Betriebsspannung Vdd einbricht und der Controller 2 abgeschaltet wird. Die Spannungsmessgröße U' folgt zunächst proportional dem Verlauf der Eingangsspannung U. Erst wenn diese zu einem Zeitpunkt t3 auch den Schwellwert Us unterschreitet, wird die Schalteinrichtung 18 von dem durchgesteuerten Zustand auf den abgesteuerten Zustand zurückgesetzt, so dass der Spannungsmesspfad 4 stromlos geschaltet wird und die Spannungsmessgröße U' hierdurch auf null absinkt.

Zu einem späteren Zeitpunkt t4 wird die Eingangsspannung U wiederum - z.B. durch Anklemmen der Fahrzeugbatterie - angelegt. Sobald zu einem kurz darauf folgenden Zeitpunkt t5 die Eingangsspannung U den Minimalwert Umin überschreitet, setzt auch die Betriebsspannung Vdd wieder ein, wodurch der Neustart des Controllers 2 initialisiert wird. Aufgrund dieses Ereignisses initialisiert der Spannungsregler 12 das Statussignal S = "BATTFAIL". Dieses Statussignal S wird in dem Statusanzeigemodul 17 vorgehalten und dem Controller 2 zur Verfügung gestellt. Die Spannungsmessgröße U' behält derweil den Wert null bei, zumal sich die Schalteinrichtung 18 weiterhin in abgesteuertem Zustand befindet.

In dem in Fig. 3 dargestellten Fallbeispiel kommt es dagegen - beispielsweise infolge eines Anlassvorgangs - zum Zeitpunkt t6 lediglich zu einem kurzfristigen Einbruch der Eingangsspannung U. Wenn kurz darauf zu einem Zeitpunkt t7 die Eingangsspannung U die Mindestspannung Umin unterschreitet, bricht wiederum auch die Betriebsspannung Vdd zusammen, wodurch der Controller 2 abgeschaltet wird. Zu einem späteren Zeitpunkt t8 steigt die Eingangsspannung U wieder über die Mindestspannung Umin an, wodurch sich die Betriebsspannung Vdd wieder aufbaut, der Neustart des Controller 2 initialisiert wird und - wie im vorhergehenden Fallbeispiel - das Statussignal S = "BATTFAIL" erzeugt wird.

Anders als im vorhergehenden Beispiel folgt aber die Spannungsmessgröße U' über die gesamte Zeit t proportional dem Wert der Eingangsspannung U, da die Eingangsspannung U den Schwellwert Us nicht unterschreitet und somit die Schalteinrichtung 18 infolge der Selbsthaltung den durchgesteuerten Zustand beibehält.

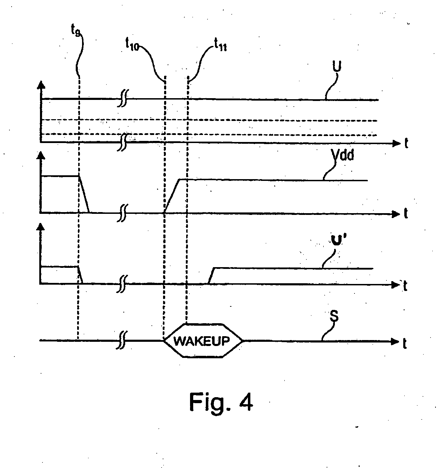

In dem in Fig. 4 dargestellten Fallbeispiel wird schließlich zu einem Zeitpunkt 19 das Steuergerät 1 in den Schlafzustand geschaltet, indem die Schalteinrichtungen 13 und 18 abgesteuert werden, und somit zum einen der Controller 2 und der Spannungsmesspfad 4 stromlos geschaltet werden.

Hierdurch kommen - unabhängig von der weiterhin konstant verlaufenden Eingangsspannung U - die Betriebsspannung Vdd und die Spannungsmessgröße U' zum Erliegen. Der Schlafzustand wird beispielsweise durch die Spannungskontrolleinheit 3 oder den Controller 2 selbst ausgelöst, wenn innerhalb einer vorgegebenen Zeitspanne kein Bedienbefehl über die Busleitungen 15 und 16 an den Controller 2 gegeben wurde.

Erfolgt zu einem späteren Zeitpunkt t10 ein solcher Bedienbefehl, während sich das Steuergerät 1 im Schlafzustand befindet, so wird dieser Befehl zunächst im LIN-Transeiver 14 registriert, worauf der LIN-Transeiver 14 den Aufweckvorgang startet. Der LIN-Transeiver 14 steuert hierzu die Schalteinrichtung 13 durch, so dass sich die Betriebsspannung Vdd wieder aufbaut, und der Neustart des Controllers 2 initialisiert wird. Der LIN-Transeiver 14 erzeugt gleichzeitig das Statussymbol S = "WAKEUP", das wiederum in dem Statusanzeigemodul 17 vorgehalten und dem Controller 2 zur Verfügung gestellt wird. Die Schalteinrichtung 18 verbleibt aber auch nach dem Aufwecken des Controllers 2 zunächst in abgesteuertem Zustand, so dass die Spannungsmessgröße U' auch nach dem Zeitpunkt t10 zunächst den Wert null beibehält.

In allen vorstehend geschilderten Fallbeispielen greift der Controller 2 im Zuge des Startvorgangs zu einem Zeitpunkt t11 auf das an dem Signalanschluss 8 anliegende Statussignal S sowie auf die an dem Analogeingang 9 anliegende Spannungsmessgröße U' zu. Durch Vergleich der Werte der Spannungsmessgröße U' und des Statussignals S mit gemäß Tabelle 1 hinterlegten Prüfkriterien kann der Controller 2 hierbei eindeutig zwischen den vorstehend beschriebenen Startsituationen unterscheiden.

**Tabelle 1**

| **Startsituation** | **S** | **U'** |
|---|---|---|
| Einschaltvorgang | BATTFAIL | 0 |
| Spannungseinbruch | BATTFAIL | 1 |
| Aufweckvorgang | WAKEUP | 0 |

Wurde gemäß Fig. 2 der Startvorgang durch einen Einschaltvorgang ausgelöst, so führt der Controller 2 eine Normierung aus. Andernfalls unterbleibt die Normierung.

Im Falle eines Einschalt- oder Aufweckvorgangs steuert der Controller 2 im Rahmen des Neustarts die Schalteinrichtung 18 wieder durch, so dass der Ausgangszustand der in den Fig. 2 bis 4 dargestellten Schaltspiele, mithin der normale Betriebszustand des Steuergeräts 1, wieder erreicht ist.

### Bezugszeichenliste

- 1: Steuergerät
- 2: Controller
- 3: Spannungskontrolleinheit
- 4: Spannungsmesspfad
- 5: Anschluss
- 6: Anschluss
- 7: Busanschluss
- 8: Signalanschluss
- 9: Analogeingang
- 10: Port
- 11: Port
- 12: Spannungsregler
- 13: Schalteinrichtung
- 14: LIN-Transeiver
- 15: Busleitung
- 16: Busleitung
- 17: Statusanzeigemodul
- 18: Schalteinrichtung
- 19: Spannungswandler
- 20: Mittelabgriff
- 21: Messleitung
- 22: Transistorarray
- 23: Steuerleitung

- B1,B2: Basisanschluss
- C1,C2: Kollektoranschluss
- E1,E2: Emitteranschluss
- M: Masse
- R1,R2: Widerstand
- R3,R4: Koppelwiderstand
- R5,R6: Vorwiderstand
- R7: Widerstand
- S: Statussignal
- T1,T2: Transistor
- U: Eingangsspannung
- Umin: Mindestspannung
- U': Spannungsmessgröße
- Us: Schwellwert
- Vdd: Betriebsspannung

- t: Zeit
- t1-t11: Zeitpunkt

## Patentansprüche

1. Elektronisches Steuergerät (1) zum Einsatz in einem Fahrzeug, insbesondere Kraftfahrzeug, mit einem Controller (2), mit einem Spannungsregler (12) zur Zuführung einer Betriebsspannung (Vdd) an den Controller (2), sowie mit einem Spannungsmesspfad (4) zur Zuführung einer für eine Eingangsspannung (U) charakteristischen und von der Betriebsspannung (Vdd) unabhängigen Spannungsmessgröße (U') an den Controller (2),
**dadurch gekennzeichnet**,
dass in dem Spannungsmesspfad (4) eine Schalteinrichtung (18) angeordnet ist, um den Spannungsmesspfad (4) in einem Schlafzustand stromlos zu schalten, und wobei die Schalteinrichtung (18) dazu ausgebildet ist, einen durchgesteuerten Schaltzustand in Abwesenheit eines definierten Abschaltsignals selbständig aufrechtzuerhalten, bis die Eingangsspannung (U) einen vorgegebenen Schwellwert (Us) unterschreitet.

2. Steuergerät (1) nach Anspruch 1, wobei der Schwellwert (Us) einen zur Erzeugung einer Betriebsspannung (Vdd) für den Controller (2) gerade noch genügenden Mindestwert (Umin) der Eingangsspannung (U) unterschreitet.

3. Steuergerät (1) nach Anspruch 2, wobei der Schwellwert (Us) weniger als 5V, bevorzugt höchstens 3V, insbesondere etwa 1 V beträgt.

4. Steuergerät (1) nach einem der Ansprüche 1 bis 3, wobei die Schalteinrichtung (18) eine bistabile elektronische Kippschaltung ist.

5. Steuergerät (1) nach einem der Ansprüche 1 bis 4,
- wobei die Schalteinrichtung (18) einen ersten Transistor (T1) und einen zweiten Transistor (T2) umfasst,
- wobei der erste Transistor (T1) basisseitig an eine Steuerleitung (23) zur Zuführung des Abschaltsignals angeschlossen ist,
- wobei der erste Transistor (T1) emitterseitig auf Masse (M) gelegt ist,
- wobei emitterseitig an den zweiten Transistor (T2) die Eingangsspannung (U) angelegt ist,
- wobei der zweite Transistor kollektorseitigseitig an einen Spannungswandler (19) zur Erzeugung der Spannungsmessgröße (U') angeschlossen ist,
- wobei der jeweilige Kollektor des ersten Transistors (T1) und des zweiten Transistors (T2) mit der Basis des jeweils anderen Transistors (T2,T1) verschaltet ist, und
- wobei Emitter und Basis jedes Transistors (T1 ,T2) jeweils über einen Koppelwiderstand (R3,R4) miteinander verschaltet sind.

6. Steuergerät (1) nach einem der Ansprüche 1 bis 5, wobei die Schalteinrichtung (18) über eine Steuerleitung (23) zur Zuführung des Abschaltsignals mit dem Controller (2) verschaltet ist.

7. Steuergerät (1) nach einem der Ansprüche 1 bis 6, wobei der Spannungsmesspfad (4) zur Erzeugung der Spannungsmessgröße (U') einen als Spannungsteiler ausgebildeten Spannungswandler (19) umfasst.

8. Steuergerät (1) nach einem der Ansprüche 1 bis 7, mit einem Statusanzeigemodul (17), das dazu ausgebildet ist, dem Controller (2) bei einem Neustart ein Statussignal (S) zur Verfügung zu stellen, anhand dessen erkennbar ist, ob der Controller (2) aufgrund eines Aufweckvorgangs aus dem Schlafzustand gestartet wurde.

9. Steuergerät (1) nach einem der Ansprüche 1 bis 8, mit einem Spannungsversorgungspfad (13,14) zur Erzeugung einer Betriebsspannung (Vdd) für den Controller (2) aus der Eingangsspannung (U), wobei in dem Spannungsversorgungspfad eine weitere Schalteinrichtung (13) angeordnet ist, um den Controller (2) in dem Schlafzustand von der Betriebsspannung (Vdd) zu trennen.

10. Steuergerät nach den Ansprüchen 8 und 9, wobei der Spannungsversorgungspfad und das Statusanzeigemodul (17) in einer Spannungskontrolleinheit (3) integriert sind.

## Claims

1. Electronic control unit (1) for use in a vehicle, in particular a motor vehicle, having a controller (2), having a voltage regulator (12) to feed a supply voltage (Vdd) to the controller (2), as well as having a voltage measuring path (4) to feed a measured value of the voltage (U') typical of an input voltage (U) and independent from the supply voltage (Vdd) to the controller (2),
**characterised in that**,
a switching unit (18) is arranged in the voltage measuring path (4) in order to disconnect the voltage measuring path (4) from the mains in sleep mode, and wherein the switching unit (18) is also designed to independently uphold an activated switching state in the absence of a defined disabling signal, until the input voltage (U) falls below a predetermined threshold value (Uₛ).

2. Control unit (1) according to claim 1, wherein the threshold value (Uₛ) falls below a minimum value (Umin) of the input voltage (U) that is only just sufficient for the generation of a supply voltage (Vdd) for the controller (2).

3. Control unit (1) according to claim 2, wherein the threshold value (Uₛ) amounts to less that 5V, preferably not exceeding 3V, in particular approximately 1V.

4. Control unit (1) according to one of claims 1 to 3, wherein the switching unit (18) is a bistable electronic circuit.

5. Control unit (1) according to one of claims 1 to 4,
- wherein the switching unit (18) comprises a first transistor (T1) and a second transistor (T2),
- wherein the first transistor (T1) is connected on the base side to a control line (23) to feed the disabling signal,
- wherein the first transistor (T1) is laid on the ground (M) on the emitter side,
- wherein the input voltage (U) connected to the second transistor (T2) on the emitter side,
- wherein the second transistor is connected on the collector side to a voltage converter (19) for the generation of the measured value of the voltage (U'),
- wherein the respective collector of the first transistor (T1) and of the second transistor (T2) is interconnected with the base of the respective other transistor (T2, T1), and
- wherein the emitter and base of each transistor (T1, T2) are respectively interconnected with each other via a coupling capacitor (R3, R4).

6. Control unit (1) according to one of claims 1 to 5, wherein the switching unit (18) is interconnected with the controller (2) via a control line (23) to feed the disabling signal.

7. Control unit (1) according to one of claims 1 to 6, wherein the voltage measuring path (4) comprises a voltage converter (19) designed as a voltage divider for the generation of the measured value of the voltage (U').

8. Control unit (1) according to one of claims 1 to 7, having a status display module (17) that is designed to supply the controller (2) with a status signal (S) when restarted, with the aid of which it can be discerned whether the controller (2) was launched due to a wake-up procedure from the sleep mode.

9. Control unit (1) according to one of claims 1 to 8, having a power supply path (13, 14) for the generation of a supply voltage (Vdd) for the controller (2) from the input voltage (U), wherein a further switching unit (13) is arranged in the power supply path, in order to separate the controller (2) in the sleep mode from the supply voltage (Vdd).

10. Control unit according to claims 8 and 9, wherein the power supply path and the status display module (17) are integrated in a voltage control unit (3).

## Revendications

1. Appareil de commande électronique (1) destiné à une utilisation dans un véhicule, notamment un véhicule automobile, comprenant une unité formant contrôleur (2), un régulateur de tension (12) pour l'amenée d'une tension de service (Vdd) au contrôleur (2), ainsi qu'un parcours de mesure de tension (4) pour amener au contrôleur (2) une grandeur de mesure de tension (U') caractéristique d'une tension d'entrée (U) et indépendante de la tension de service (Vdd),
**caractérisé**
en ce que dans le parcours de mesure de tension (4) est agencé un dispositif de commutation (18) destiné à commuter hors courant le parcours de mesure de tension (4) dans un état de sommeil, le dispositif de commutation (18) étant conçu pour conserver automatiquement un état de commutation passant, en l'absence d'un signal d'arrêt défini, jusqu'à ce que la tension d'entrée (U) passe en-dessous d'une valeur de seuil (Us) prescrite à l'avance.

2. Appareil de commande (1) selon la revendication 1, dans lequel la valeur de seuil (Us) se situe en-dessous d'une valeur minimum (Umin) de la tension d'entrée (U), juste encore suffisante pour produire une tension de service (Vdd) pour le contrôleur (2).

3. Appareil de commande (1) selon la revendication 2, dans lequel la valeur de seuil (Us) vaut moins de 5V, de préférence au plus 3V, et notamment environ 1V.

4. Appareil de commande (1) selon l'une des revendications 1 à 3, dans lequel le dispositif de commutation (18) est un circuit de bascule électronique bistable.

5. Appareil de commande (1) selon l'une des revendications 1 à 4,
dans lequel le dispositif de commutation (18) comprend un premier transistor (T1) et un deuxième transistor (T2),
dans lequel le premier transistor (T1) est raccordé par sa base, à une ligne de commande (23) pour l'amenée du signal d'arrêt,
dans lequel le premier transistor (T1) est appliqué à la masse (M) par son émetteur,
dans lequel la tension d'entrée (U) est appliquée à l'émetteur du deuxième transistor (T2),
dans lequel le deuxième transistor est raccordé par son collecteur, à un transformateur de tension (19) pour produire la grandeur de mesure de tension (U'),
dans lequel le collecteur respectif du premier transistor (T1) et du deuxième transistor (T2) est connecté respectivement à la base de l'autre transistor (T2, T1), et
dans lequel l'émetteur et la base de chaque transistor (T1, T2) sont connectés mutuellement l'un à l'autre par l'intermédiaire d'une résistance de couplage (R3, R4) respective.

6. Appareil de commande (1) selon l'une des revendications 1 à 5, dans lequel le dispositif de commutation (18) est connecté au contrôleur (2) par l'intermédiaire d'une ligne de commande (23) pour l'amenée du signal d'arrêt.

7. Appareil de commande (1) selon l'une des revendications 1 à 6, dans lequel le parcours de mesure de tension (4) comprend, pour produire la grandeur de mesure de tension (U'), un convertisseur de tension (19) réalisé en tant que diviseur de tension.

8. Appareil de commande (1) selon l'une des revendications 1 à 7, comprenant un module d'indication de statut (17), qui est conçu pour mettre à disposition du contrôleur (2), lors d'un nouveau démarrage, un signal de statut (S) au regard duquel il est possible de savoir si le contrôleur (2) a été démarré de l'état de sommeil en raison d'une phase de réveil.

9. Appareil de commande (1) selon l'une des revendications 1 à 8, comprenant un parcours d'alimentation en tension (13, 14) pour produire une tension de service (Vdd) pour le contrôleur (2) à partir de la tension d'entrée (U), un autre dispositif de commutation (13) étant agencé dans le parcours d'alimentation en tension, pour isoler le contrôleur (2) de la tension de service (Vdd), dans l'état de sommeil.

10. Appareil de commande selon les revendications 8 et 9, dans lequel le parcours d'alimentation en tension et le module d'indication de statut (17) sont intégrés dans une unité de contrôle de tension (3).
